# EUROPÄISCHE PATENTANMELDUNG

(11) **EP 1 249 431 A2**
(43) Veröffentlichungstag der Anmeldung: **16.10.2002**
(21) Anmeldenummer: 02450063.9
(22) Anmeldetag: 15.03.2002
(51) Int. Cl.: C02F 11/12

(54) **Schlammtrocknungsanlage**

(30) Priorität: 11.04.2001 AT 5882001
(71) Anmelder: Spitzer, Herbert, 8250 Vorau (AT)
(72) Erfinder: Spitzer, Herbert, 8250 Vorau (AT)
(74) Vertreter: Gibler, Ferdinand, Dipl.Ing. Dr. techn.

(57) **Zusammenfassung**

Vorrichtung zum diskontinuierlichen Entwässern von Schlämmen, wobei der Schlamm bis zu einer vorbestimmbaren Höhe auf ein in einer im wesentlichen waagrechten Ebene geführtes Siebband (5) aufgegeben wird, und nach einer vorbestimmbaren Entwässerungsdauer, während der das Siebband (5) stillsteht, über eine Schlammabwurfstelle (17) in Bandrichtung abgegeben wird, wobei zumindest eine Durchtrittsverhinderung (20) im Bereich oberhalb des Siebbandes (5) vorgesehen ist, welche während der Entwässerungsdauer ein Auslaufen des Schlammes in Bandrichtung (Δ5) verhindert.

## Beschreibung

Die Erfindung betrifft eine Vorrichtung zum diskontinuierlichen Entwässern von Schlämmen, wobei der Schlamm bis zu einer vorbestimmbaren Höhe auf ein in einer im wesentlichen waagrechten Ebene geführtes Siebband aufgegeben wird, und nach einer vorbestimmbaren Entwässerungsdauer, während der das Siebband stillsteht, über eine Schlammabwurfstelle in Bandrichtung abgegeben wird.

Beim Entwässern und Trocknen von Klär- oder Abwasserschlamm wird der in Abwasser-Reinigungs- oder Kläranlagen anfallende Schlamm bei bekannten Anlagen für gewöhnlich über Filter geleitet. Die Trennung des festen vom flüssigen Anteil erfolgt alsdann unter der Einwirkung der Schwerkraft bzw. mittels Pressen oder Zentrifugen. Eine gängige Methode besteht etwa darin, den Schlamm zunächst in sackartige Behälter zu füllen, wodurch ein Teil des Wassers abfließen kann. Der dergestalt entwässerte Schlamm kann in den Behältern, die meist aus einem verrottbaren Material geformt sind, anderwertig zur weiteren Trocknung gelagert werden. Eine andere, im Rahmen der vorliegenden Erfindung weiterentwickelte Möglichkeit besteht darin, den Schlamm über ein Siebtuch zu führen, durch das das Wasser hinduchtreten kann. Unter dem Siebtuch können geeignete Flüssigkeits-Abzugskanäle vorgesehen sein, die das Wasser in ein Sammelbecken leiten.

Es hat sich gezeigt, daß die Befüllhöhe des zu entwässernden Schlammes im Filterbehälter bzw. auf dem Siebband für die Geschwindigkeit des Abtropfvorganges entscheidend ist. Bei zu großen aber auch bei zu kleinen Befüllhöhen, die einen optimalen Wert unter- bzw. überschreiten, nimmt die benötigte Entwässerungszeit pro Massenanteil Schlamm rapide zu. Bei Unterschreitung des optimalen Wertes wird die Entwässerungszeit zwar geringer, die aufgebrachte Schlammmenge verringert sich aber ebenfalls, wodurch die effektive Entwässerungsdauer der Gesamtschlammmenge wesentlich erhöht wird. Diese optimale Befüllhöhe ist je nach Schlammart unterschiedlich und bei gegebenem Filtermaterial bzw. Siebband nur von der Zusammensetzung und der Konsistenz des Schlammes abhängig.

Zur Optimierung der schlammabhängigen Befüllhöhe sind diskontinuierliche Verfahren zur Entwässerung besonders gut geeignet, da hier die Entwässerungsdauer genau eingestellt werden kann. Dabei wird beispielsweise der Schlamm auf ein waagrechtes Siebband aufgegeben, welches nach einer bestimmten Entwässerungsdauer, während der das Siebband stillsteht, den Schlamm bis zu einer Schlammabwurfstelle weiterführt.

Nachteilig ergibt sich bei den bislang bekannten diskontinuierlichen Bandentwässerungsanlagen, daß die Befüllhöhe nur ungenau eingestellt werden kann, da der Schlamm sich in Bandrichtung ausbreiten kann.

Es ist Aufgabe der vorliegenden Erfindung, eine diskontinuierliche Bandentwässerungsanlage der eingangs angeführten Art vorzustellen, welche diesen Nachteil beseitigt und es erlaubt, die optimale Befüllhöhe des Siebbandes mit großer Genauigkeit einzustellen.

Erfindungsgemäß wird dies dadurch erreicht, daß zumindest eine Durchtrittsverhinderung im Bereich oberhalb des Siebbandes vorgesehen ist, welche während der Entwässerungsdauer ein Auslaufen des Schlammes in Bandrichtung verhindert.

Dadurch wird erreicht, daß der Schlamm während des Entwässerungsvorganges auf einem bestimmten Gebiet des Siebbandes lokalisiert bleibt. Die optimale Befüllhöhe ist somit leicht einzustellen und wird während der gesamten Entwässerungsdauer im wesentlichen beibehalten.

Gemäß einer ersten Ausführungsform der Erfindung kann vorgesehen sein, daß eine Hebevorrichtung zum Abheben der Durchtrittsverhinderung vom Siebband vorgesehen ist. Dies ermöglicht es, den Schlamm nach der Entwässerung sehr einfach, nämlich durch Weiterdrehen des Bandes, in Richtung der Schlammabwurfstelle zu transportieren.

Gemäß einer weiteren Ausführungsform der Erfindung kann vorgesehen sein, daß die Durchtrittsverhinderung in Bandrichtung verklappbar angebracht ist. Dadurch ist eine alternative Möglichkeit gegeben, den Schlamm nach der Entwässerung in Bandrichtung zu transportieren, welche insbesondere den Vorteil besonders kompakter Bauweisen mit sich bringt.

In weiterer Ausgestaltung der Erfindung kann vorgesehen sein, daß die Durchtrittsverhinderung aus flüssigkeitsdurchlässigem Material gebildet ist. Mit dieser Maßnahme erreicht man, daß das Wasser während des Entwässerungsvorganges auch über die Durchtrittsverhinderung austreten kann. Dadurch wird die Entwässerungsdauer weiter verkürzt.

Gemäß einer besonders bevorzugten Ausführungsform der Erfindung kann vorgesehen sein, daß die Durchtrittsverhinderung durch eine Querwand gebildet ist, die Teil eines Befüllrahmens ist, in welchen der zu entwässernde Schlamm eingebracht wird. Dies ermöglicht die örtliche Begrenzung der Schlammschicht auf dem Siebband durch einen einzigen Bauteil.

Die Erfindung wird unter Bezugnahme auf die beigeschlossenen Zeichnungen, in welchen besonders bevorzugte Ausführungsbeispiele dargestellt sind, näher beschrieben. Dabei zeigt:
Fig. 1 eine Schlammtrocknungsanlage mit erfindungsgemäßer Entwässerungsvorrichtung 14 im Schnitt;
Fig. 2 eine erfindungsgemäße Schlammwanne 1 im Schrägriß;
Fig. 3 eine erfindungsgemäße Durchtrittsverhinderung 20 im Schnitt;
Fig. 4 den Grundriß einer konstruktiv anders ausgeführten erfindungsgemäßen Durchtrittsverhinderung 20;
Fig. 5 eine weitere erfindungsgemäße Durchtrittsverhinderung 20 im Schnitt;
Fig. 6 eine wieder andere Ausführungsform einer erfindungsgemäßen Schlammwanne 1 im Schnitt und
Fig. 7 eine Ausführungsform eines erfindungsgemäßen Entwässerungsmoduls mit verklappbarer und abhebbarer Durchtrittsverhinderung 20 im Schnitt.

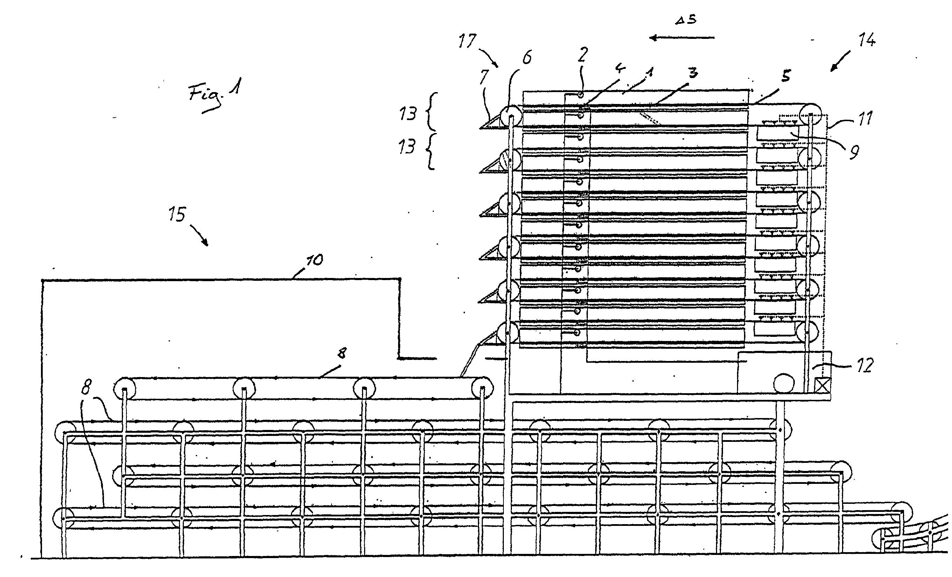

Fig. 1 zeigt das Prinzip einer Schlammtrocknungsanlage mit einer vorgeschaltenen erfindungsgemäßen diskontinuierlichen Entwässerungsanlage 14 und einer nachgeschaltenen Trocknungsanlage 15. Die Entwässerungsanlage 14 besteht dabei aus mehreren übereinander gestapelten Entwässerungsmodulen 13, deren Funktionsweise im folgenden näher beschrieben wird.

Vor dem Entwässerungsvorgang wird die Konsistenz des zu trocknenden Schlammes bestimmt und die entsprechende optimale Befüllhöhe ermittelt. Dies kann z.B. rechnergesteuert über gespeicherte Tabellen erfolgen. Weiters kann eine Füllstandregulierung vorgesehen sein, mit welcher gewährleistet wird, daß die erfindungsgemäßen Schlammwannen 1 nur bis zu dieser optimalen Höhe befüllt werden. Die Regulierung der Befüllhöhe kann aber auch per Hand durchgeführt werden.

Der zu entwässernde Schlamm wird über den Schlammzulauf 2 auf ein Siebband 5 aufgebracht, welches über angetriebene Rollen 6 geführt ist. Eine erfindungsgemäße Schlammwanne 1 verhindert dabei ein Auslaufen des Schlamms während des Aufbringens und der anschließenden Entwässerung des Schlammes. Auf dem in einer im wesentlichen waagrechten Ebene geführten Siebband 5 erfolgt die Entwässerung vornehmlich durch Schwerkraft (in geringem Ausmaß auch durch Verdunsten des Wassers an der Oberfläche).

Das sich im unteren Bereich des zu entwässernden Schlammes sammelnde Wasser tropft schließlich über das Siebband 5 ab und wird in der unterhalb des Siebbands 5 angebrachten Auffangwanne 3 gesammelt. Das gesammelte Wasser wird über einen Wasserablauf 4 entsorgt.

Nach erfolgter Entwässerung wird das Siebband 5 über die Antriebsrollen 6 in die mit dem Pfeil Δ5 gekennzeichnete Bandrichtung fortbewegt. Hierfür wird in der dargestellten Ausführungsform die Schlammwanne 1 angehoben, so daß der entwässerte Schlamm unter der Schlammwanne 1 durchgeführt wird.

Die Lösung des entwässerten Schlamms vom Siebband 5 erfolgt im Bereich der Schlammabwurfstelle 17 durch Abstreifer 7, unter denen das Siebband 5 durchgezogen wird. Das Siebband 5 wird anschließend im Bereich der Siebbandreinigung 9 von Schlammrückständen gereinigt, wofür ein Zufluß 11 für Reinigungswasser vorgesehen ist. Schließlich ist ein Wasserbehälter 12 mit Ablauf vorgesehen, in welchem das gesamte Wasser aus dem Entwässerungs- und aus dem Reinigungsvorgang gesammelt wird.

Der erfindungsgemäßen Entwässerungsanlage 14 ist in Fig.1 eine Trocknungsanlage 15 nachgeschalten, in welcher der entwässerte Schlamm von den restlichen Wasserrückständen befreit wird. Der entwässerte Schlamm fällt dabei nach dem Passieren der Abstreifer 7 auf ein Trocknungsband 8. Dadurch, daß mehrere Trocknungsbänder 8 übereinander angeordnet sind, kann die effektive Gesamtlänge des Weges, welchen der zu trocknende Schlamm auf den Trocknungsbändern 8 zurücklegt, auf einfache Weise erhöht werden. Zweckmäßigerweise ist die Trocknungsanlage 15 von einem Transparentbehälter 10 umhüllt, so daß die Trocknung durch Sonneneinstrahlung und die damit verbundene Erhöhung der Temperatur im Bereich des Trocknungsbandes 8 weiter beschleunigt werden kann. Für die Trocknungsdauer ist hier die Dicke des auf dem Trocknungsband 8 aufgebrachten Schlammes ausschlaggebend. Die optimale Dicke ist wie bei der Entwässerung von der Schlammbeschaffenheit abhängig. Bei dem mit der dargestellten Trocknungsanlage 15 getrockneten Schlamm hat sich beispielsweise eine optimale Dicke von 0,3 bis 1,5 cm ergeben. Die optimale Gesamttrocknungsdauer erhält man, wenn die Dicke des Schlammes nach der Entwässerung der optimalen Trocknungsdicke entspricht. Dies erfordert ein Abstimmen der Anzahl der Entwässerungsmodule 13 mit der Bandgeschwindigkeit des Trocknungsbandes 8.

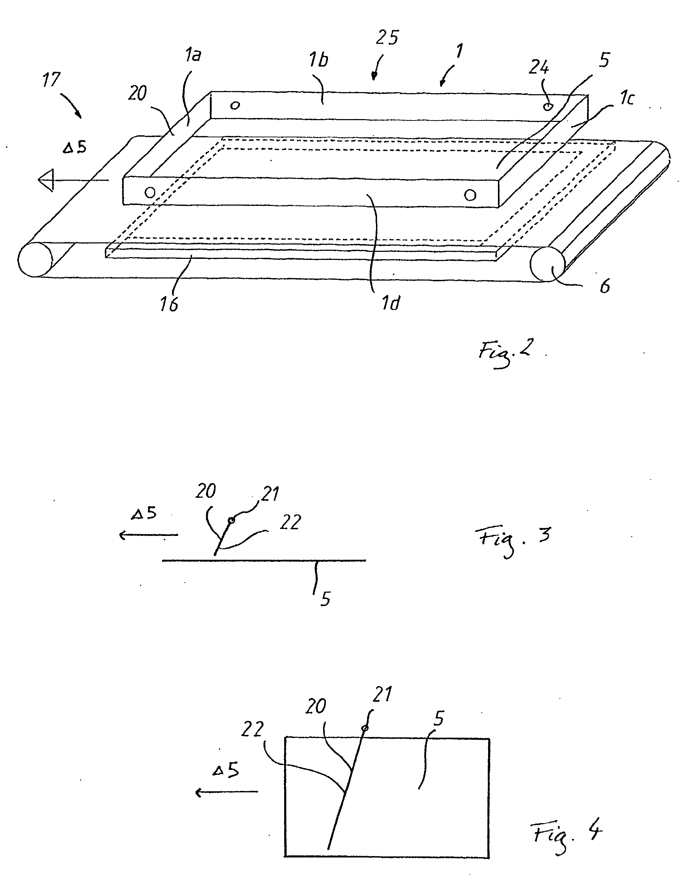

Der erfindungsgemäße Befüllrahmen 25, der ein Auslaufen des Schlamms während des Aufbringens und der anschließenden Entwässerung des Schlammes verhindert, ist am besten anhand der Fig.2 beschrieben.

Fig. 2 zeigt einen vom Siebband 5 abgehobenen, als Schlammwanne 1 ausgebildeten Befüllrahmen 25. Die Schlammwanne 1 weist vier im wesentlichen vertikal ausgerichtete Seitenwände 1a,1b,1c und 1d auf. Die erste Seitenwand 1a der Schlammwanne 1 ist als Querwand ausgebildet und stellt hier die erfindungsgemäße Durchtrittsverhinderung 20 dar, welche während der Entwässerung ein Auslaufen des Schlammes in Bandrichtung verhindert.

Während der Befüll- und der Entwässerungsphase liegt die Schlammwanne 1 auf dem Siebband 5 auf und ruht auf einem Stützrahmen 16. Dieser ist zwischen den beiden Laufflächen des Siebbandes 5 angebracht und dient im befüllten Zustand der Schlammwanne 1 als Stütze für das Siebband 5 und die Schlammwanne 1. Es kann aber auch vorgesehen sein, wie in Fig. 7 skizziert, das Siebband 5 auf Auflageköpfen 26 abgestützt auszuführen. Die Auflage kann beispielsweise durch abgerundete T-Schienen, welche längs oder quer zur Bandrichtung ausgerichtet sind, erfolgen. Die Schlammwanne 1 kann vor der Befüllung mit dem zu entwässernden Schlamm auf den Stützrahmen 16 gespannt werden um ein seitliches Austreten des Schlammes zu verhindern. Da sich das befüllte Siebband im Bereich zwischen den Auflageköpfen nach unten wölbt, erfolgt das Abtropfen des Wassers vor allem an diesen Stellen.

Natürlich sind neben der dargestellten rechteckigen Form der Schlammwanne 1 mit senkrechten Seitenwänden 1a,1b,1c,1d auch andere Formen für eine erfindungsgemäße Schlammwanne denkbar. So kann es beispielsweise vorteilhaft sein, die seitlichen Berandungen der Schlammwanne 1 nicht vertikal, sondern mit einem gewissen Winkel zur Vertikalen auszuführen. Dies bringt den Vorteil einer leichteren Befüllung der Schlammwanne 1, wobei die Berandung teilweise die Funktion eines Trichters einnehmen kann. Weiters kann der Grundriß der Schlammwanne 1 anstatt eines rechteckigen Querschnittes auch rund oder mehreckig, beispielsweise sechseckig, ausgestaltet sein.

Wesentlich ist bei allen diesen Ausgestaltungen einer erfindungsgemäßen Schlammwanne 1 lediglich, daß eine Durchtrittsverhinderung 20 vorgesehen ist, durch welche ein Auslaufen des Schlammes in Bandrichtung verhindert wird.

Dieses Auslaufen ist natürlich nur während der Befüll- und der Entwässerungszeit zu unterbinden.

Die in Fig. 2 skizzierte Schlammwanne 1 ist für den Zeitpunkt nach der Entwässerung durch eine nicht dargestellte Hebevorrichtung 27 vom Siebband 5 abgehoben. Die Hebevorrichtung 27 kann beispielsweise eine Seilwinde beinhalten und mehrere Greifer aurweisen, welche in Löcher 24 im Bereich der Seitenwände 1a,1b,1c,1d der Schlammwanne 1 eingreifen. Die Hebevorrichtung 27 kann aber auch durch mechanische oder pneumatische Hebezylinder gebildet sein, wie in Fig. 7 dargestellt.

Durch das Abheben der Durchtrittsverhinderung 20 vom Siebband 5 ist gewährleistet, daß der auf dem Siebband 5 befindliche entwässerte Schlamm unter der Seitenwand 1a der Schlammwanne 1 hindurch geführt werden kann. Bei der Entwässerungsanlage 14 nach Fig. 1 ist es beispielsweise möglich, die aufgetragene Schlammschicht lediglich einige Zentimeter dick zu wählen, so daß ein Anheben der Schlammwanne 1 um einige Zentimeter bereits ausreichend sein kann.

Es ist aber auch möglich, die Durchtrittsverhinderung 20 so auszuführen, daß kein gesondertes Abheben notwendig ist. Dies kann etwa durch Platzmangel bei der beschriebenen modularen Bauweise der Entwässerungsanlage 14 begründet sein.

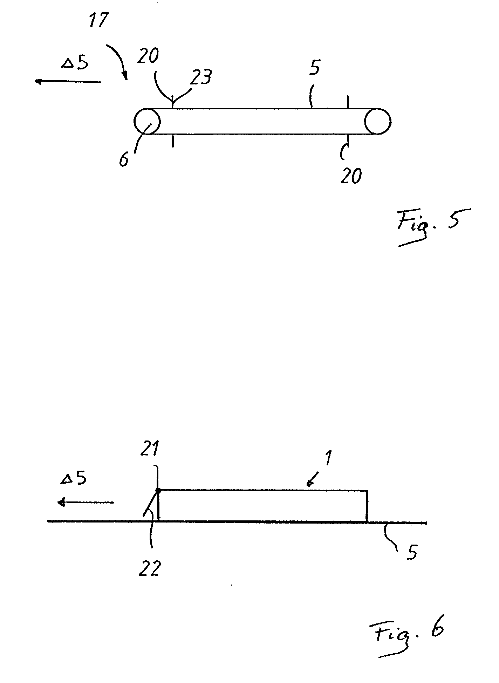

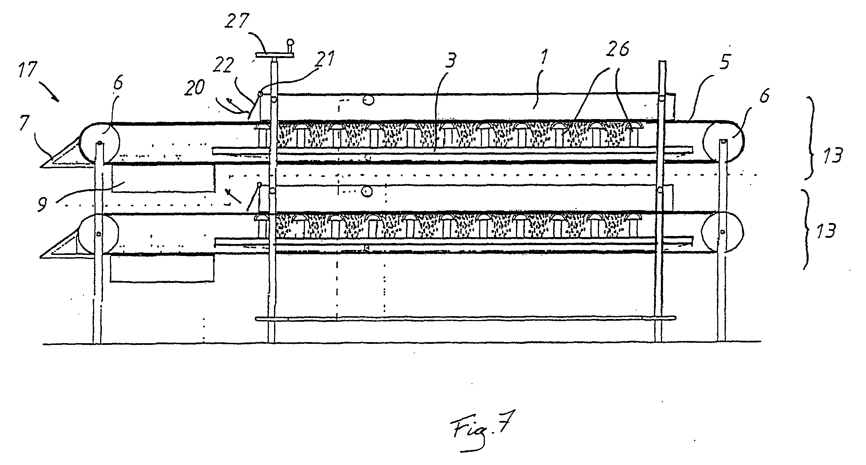

In diesem Fall besteht eine besonders bevorzugte Ausführungsform der Erfindung darin, die Durchtrittsverhinderung 20 in Bandrichtung verklappbar anzubringen, wie etwa in Fig.3 und 4 skizziert. Fig. 3 und 4 zeigen eine Durchtrittsverhinderung 20, welche jeweils durch eine um ein Gelenk 21 drehbar gelagerte Klappe 22 gebildet ist, wobei die Drehachse einmal horizontal (Fig.3) und einmal vertikal verlaufend angeordnet wurde (Fig.4). Der besondere Vorteil der Ausführung nach Fig. 4 besteht darin, daß auch entwässerter Schlamm, welcher eine Schichtdicke aufweist, die größer ist als die Höhe der Achse des Gelenks 21 in Fig.3, ungehindert weiter transportiert werden kann. Die Ausführung nach Fig. 3 ermöglicht demgegenüber eine solidere Bauform.

Eine weitere Möglichkeit besteht darin, eine beschriebene Schlammwanne 1 mit stirnseitig klappbarer Querwand 1a auszubilden, wie in Fig. 6 und 7 gezeigt. Die Querwand 1a ist als stirnseitig um ein Gelenk 21 drehbare Klappe 22 ausgeführt.

Eine weitere Möglichkeit, eine erfindungsgemäße Durchtrittsverhinderung 20 vorzusehen, besteht in der Verwendung eines in Fig.5 skizzierten Siebbandes 5 mit Querstreben 23. Diese bilden für die Dauer der Entwässerung die erfindungsgemäße Durchtrittsverhinderung 20. Nach der Entwässerung werden die Querstreben 23 mit dem Band mitgeführt und ermöglichen die Abgabe des entwässerten Schlammes. Um die Funktion der Abstreifer 7 weiterhin zu ermöglichen, ist es gemäß einer weiteren vorteilhaften Ausführungsform der Erfindung möglich, die Querstreben 23 einklappbar auszuführen, sodaß sie mit dem Siebband 5 unter den Abstreifern 7 durchgezogen werden können.

Als besonders vorteilhaft erweist sich eine Ausführungsform, bei der die Durchtrittsverhinderung 20 aus flüssigkeitsdurchlässigem Material gebildet ist. In diesem Fall kann das Wasser auch durch diese abtropfen. Insbesondere ist es möglich, eine erfindungsgemäße Schlammwanne 1, bzw. deren Seiten- und Querwände 1a,1b,1c,1d aus flüssigkeitsdurchlässigem Material zu bilden. Die Entwässerung erfolgt somit auch über diese Wände, wodurch die gesamte Entwässerungsdauer weiter verkürzt wird.

## Patentansprüche

1. Vorrichtung zum diskontinuierlichen Entwässern von Schlämmen, wobei der Schlamm bis zu einer vorbestimmbaren Höhe auf ein in einer im wesentlichen waagrechten Ebene geführtes Siebband (5) aufgegeben wird, und nach einer vorbestimmbaren Entwässerungsdauer, während der das Siebband (5) stillsteht, über eine Schlammabwurfstelle (17) in Bandrichtung abgegeben wird, **dadurch gekennzeichnet, daß** zumindest eine Durchtrittsverhinderung (20) im Bereich oberhalb des Siebbandes (5) vorgesehen ist, welche während der Entwässerungsdauer ein Auslaufen des Schlammes in Bandrichtung (Δ5) verhindert.

2. Vorrichtung nach Anspruch 1, **dadurch gekennzeichnet, daß** eine Hebevorrichtung (27) zum Abheben der Durchtrittsverhinderung (20) vom Siebband (5) vorgesehen ist.

3. Vorrichtung nach Anspruch 1 oder 2, **dadurch gekennzeichnet, daß** die Durchtrittsverhinderung (20) in Bandrichtung (Δ5) verklappbar angebracht ist.

4. Vorrichtung nach einem der Ansprüche 1 bis 3 , **dadurch gekennzeichnet, daß** die Durchtrittsverhinderung (20) aus flüssigkeitsdurchlässigem Material gebildet ist.

5. Vorrichtung nach einem der Ansprüche 1 bis 4, **dadurch gekennzeichnet, daß** die Durchtrittsverhinderung (20) durch eine Querwand (1a) gebildet ist, die Teil eines Befüllrahmens (25) ist, in welchen der zu entwässernde Schlamm eingebracht wird.
